(19) **Europäisches Patentamt / European Patent Office / Office européen des brevets**

(11) **EP 0 897 549 B1**

(12) **FASCICULE DE BREVET EUROPEEN**

(45) Date de publication et mention de la délivrance du brevet:
**26.08.2009 Bulletin 2009/35**

(21) Numéro de dépôt: **97921927.6**

(22) Date de dépôt: **05.05.1997**

(51) Int Cl.:
*G02B 27/22* (2006.01)   *H04N 13/00* (2006.01)
*G03B 35/24* (2006.01)

(86) Numéro de dépôt international:
**PCT/FR1997/000786**

(87) Numéro de publication internationale:
**WO 1997/043680 (20.11.1997 Gazette 1997/50)**

(54) **DISPOSITIF DE FORMATION D'UNE IMAGE AUTOSTEREOSCOPIQUE ET SYSTEME LE COMPRENANT**

AUTOSTEREOSKOPISCHES BILDERZEUGUNGSGERÄT UND SYSTEM UNTER VERWENDUNG DESSELBEN

AUTOSTEREOSCOPIC IMAGING DEVICE AND SYSTEM COMPRISING IT

(84) Etats contractants désignés:
**DE ES FR GB IT NL SE**

(30) Priorité: **09.05.1996 FR 9605777**

(43) Date de publication de la demande:
**24.02.1999 Bulletin 1999/08**

(73) Titulaire: **ALIOSCOPY**
**75020 Paris (FR)**

(72) Inventeur: **Allio, Pierre**
**75020 Paris (FR)**

(74) Mandataire: **Jacquard, Philippe Jean-Luc et al**
**Cabinet ORES**
**36, rue de St Pétersbourg**
**75008 Paris (FR)**

(56) Documents cités:
WO-A1-94/25891   WO-A1-94/26071
US-A- 2 021 162   US-A- 3 688 045
US-A- 3 932 699

## Description

La présente invention concerne un dispositif de formation d'une image autostéréoscopique comprenant n points de vue (ou images élémentaires), ledit dispositif comportant un réseau lenticulaire comprenant des lentilles cylindriques élémentaires, dénommées lenticules cylindriques, disposées côte à côte parallèlement à une première direction.

On connaît de tels dispositifs qui ont été mis en oeuvre pour constituer des caméras autostéréoscopiques, voir par exemple US-A-3688045. Il est fait référence en particulier aux dispositifs de prise de vue autostéréoscopique décrits dans les Brevets suivants du Demandeur : le Brevet des Etats-Unis US-5 099 320, et les Brevets français FR-2 705 007 et 2 704 951. Ces dispositifs de prise de vue mettent en oeuvre un réseau lenticulaire présentant un grand nombre de lenticulés cylindriques placées côte à côte et l'image vidéo est obtenue en pratique de manière imbriquée sous forme de colonnes de pixels, la première image élémentaire étant constituée par les pixels de la première colonne de pixels et les pixels des autres colonnes espacées de celle-ci modulo n, la deuxième image élémentaire étant constituée par les pixels de la deuxième colonne et ceux des colonnes distantes de celle-ci modulo n et ainsi de suite, chaque lenticule ayant une largeur correspondant à n colonnes de pixels.

Les termes "ligne" et "colonne" désignent respectivement les rangées horizontales et les rangées verticales de pixels vues par un observateur debout ou assis, indépendamment par exemple de la direction de balayage, horizontale ou verticale, d'un tube cathodique de visualisation. Par exemple, pour un écran cathodique dont les lignes de balayage sont disposées verticalement, on considérera ces "lignes de balayage" comme des colonnes au sens du présent texte.

La qualité de ces dispositif de prise de vue est dépendante de la qualité avec laquelle est réalisé le réseau lenticulaire qui comporte N/n lenticules, N désignant le nombre de pixels d'une ligne d'une image vidéo dans le standard choisi.

Ainsi qu'il a été décrit dans les Brevets français précités, un dispositif de reprise d'image permet d'utiliser un réseau lenticulaire dont lès dimensions sont de l'ordre de 10 fois plus grandes que celles d'un capteur à couplage de charges CCD, ce qui facilite la mise en oeuvre pratique.

Un tel réseau lenticulaire présente donc un grand nombre de lenticules cylindriques, le nombre de lenticules dépendant à la fois du standard vidéo choisi (SECAM, PAL, NTSC, HDTV, etc. .) et du nombre de points de vue. Or, la précision de positionnement qui est nécessaire est proportionnelle au nombre de lenticules.

En outre, les applications vidéo nécessitant des caméras miniatures, par exemple des endoscopes, imposent une réduction très importante des dimensions du réseau lenticulaire, d'où une complication de réalisation importante, voire une impossibilité.

La présente invention a ainsi pour objet un dispositif de formation d'une image autostéréoscopique et notamment un dispositif de prise de vue, qui soit relativement simple à réaliser et à régler et qui, en particulier, se prête bien à la miniaturisation, notamment pour l'endoscopie.

L'invention concerne ainsi un dispositif de formation d'une image autostéréoscopique tel que défini à la revendication 1. Pour une mise au point à l'infini ($\Delta = \infty$), le plan de mise au point commun est un plan focal commun au réseau lenticulaire et à l' ensemble optique cylindrique.

Selon l'invention, le réseau lenticulaire ne comporte plus maintenant que n lenticules cylindriques de pas p, par exemple n = 4, à comparer avec le nombre important de lenticules mis en oeuvre dans les dispositifs de prise de vue de l'Art Antérieur, à savoir N/n, par exemple 144 lenticules cylindriques pour N = 576 et n = 4.

De plus, dans le dispositif selon l'invention, la base stéréoscopique d'observation peut être égale à 2 fois le pas p des lenticules cylindriques, soit pour n = 4, à la moitié de la largeur L du réseau. En effet, dans le système d'autostéroscopie selon l'invention, par exemple avec un nombre de points de vue compris entre 3 et 6, l'écart (ou base stéréoscopique élémentaire) entre deux points de vue adjacents peut être, dans des conditions optimisées d'observation, égal à la moitié de l'écart E entre les yeux d'un observateur (E = 65 mm). D'une manière plus générale, il peut être égal à la moitié de la base stéréoscopique choisie B.

A la distance nominale d'observation (qui est la distance théorique de la teinte plate), l'observateur voit (pour n = 4) un couple stéréoscopique formé selon l'invention par le premier $I_1$ et le troisième $I_3$ points de vue, ou bien par le deuxième $I_2$ et le quatrième points de vue $I_4$. Ce choix de paramètres, selon lequel un couple stéréoscopique est formé non par deux points de vue adjacents, mais par deux points de vue entre lesquels est intercalé un point de vue intermédiaire (ou même m (avec m $\geq$ 1) points de vue intermédiaires auquel cas, la base stéréoscopique élémentaire entre deux points de vue adjacents qui est égale au pas p du réseau lenticulaire de prise de vue, est égale à B/(m +1)), de manière à permettre à un observateur dépourvu de lunettes spéciales de disposer d'un volume de visualisation lui permettant de se déplacer à la fois parallèlement et perpendiculairement à un écran de visualisation, caractérise l'autostéréoscopie homogène au sens de la présente Demande.

De la sorte, et en se référant à l'exemple précité, un observateur peut se rapprocher ou s'éloigner de l'écran à partir de la distance théorique de la teinte plate ou bien encore se déplacer latéralement sans perdre la vision stéréoscopique.

En effet, une fois l'image figée à l'écran, si le spectateur se rapproche de l'écran de visualisation par rapport à la distance nominale d'observation (ou distance théorique de la teinte plate), la base stéréoscopique effectivement perçue grandit et s'il s'éloigne de l'écran, elle diminue et la sensation globale est constante parce que cette variation de base stéréoscopique compense exactement la variation de sensation de la profondeur liée à la modification des efforts de vergence -efforts musculaires effectués pour mettre en correspondance les deux images rétiniennes afin d'assurer la fusion stéréoscopique nécessaire à la perception du relief- qui accompagnent obligatoirement les déplacements dans le sens perpendiculaire à l'écran.

Lorsque la "teinte plate" a été réglée pour que l'observateur voie les points de vue [(I₁) et (I₃)] ou [(I₂) et (I₄)] et que celui-ci se rapproche suffisamment de l'écran de visualisation, il voit alors les points de vue (I₁) et (I₄) et il ne peut pas bouger parallèlement à l'écran, comme dans un cas réel où l'on regarde de près. Lorsqu'il s'éloigne de l'écran, il perçoit les points de vue [(I₁) et (I₂)] ou [(I₂) et (I₃)] ou [(I₃) et (I₄)] et il a la possibilité de mouvements importants, d'où résulte pour l'observateur la possibilité de se déplacer dans un volume.

Il en va de même, avec un confort accru dans le cas où m est choisi supérieur à 1.

Dans le cas d'une caméra miniature ou en endoscopie, la base stéréoscopique de prise de vue B est très inférieure à l'écart inter-pupillaire de l'observateur à cause du fort grossissement souhaité. Pour n = 4, le pas p des lenticules reste cependant égal à la moitié de la base stéréoscopique de prise de vue B nécessaire.

Ceci reste bien entendu vrai dans le cas d'un objectif à longue focale, pour lequel la base stéréoscopique B est choisie supérieure à l'écart inter-pupillaire E de l'observateur.

Selon la présente invention, la base stéréoscopique totale $B_T$, c'est-à-dire la base stéréoscopique entre les points de vue les plus écartés est égale à (n - 1) p.

Dans l'Art Antérieur selon les Brevets français précités, la base stéréoscopique totale a, pour valeur le diamètre de la pupille de l'objectif de prise de vue.

En d'autres termes, et toutes choses égales par ailleurs, le pas et donc la taille des lenticules cylindriques sont, selon la présente invention $N/n^2$ fois supérieurs à ceux des lenticules cylindriques des dispositifs de prises de vues de l'Art Antérieur. Pour n = 4, ils sont 36 fois plus grands que dans l'exemple précité (N = 576 et n = 4).

Selon un premier mode de réalisation, 1 ensemble optique cylindrique est convergent et le réseau lenticulaire est également convergent.

Selon un deuxième mode de réalisation, l'ensemble optique cylindrique est convergent et le réseau lenticulaire est divergent.

Selon un troisième mode de réalisation, l'ensemble optique cylindrique est divergent et le réseau cylindrique est convergent.

Enfin, selon un quatrième mode de réalisation, l'ensemble optique cylindrique est divergent et le réseau cylindrique est également divergent.

Dans le but de corriger le rapport d'anamorphose (ou rapport de grandissement) du système dont la valeur nominale est égale à n, mais qui varie légèrement en fonction de la distance de mise au point, la valeur absolue du rapport entre la distance focale de l'ensemble optique cylindrique et la distance focale des lenticules du réseau lenticulaire est avantageusement égale à n*, n* étant égal à nk, k étant un coefficient de correction de rapport de grandissement tel que, pour un objet situé à une distance donnée, chacun des points de vue de l'image ait un rapport d'anamorphose dont la valeur absolue est égale à n.

En particulier, et selon un mode de réalisation préféré, k varie en fonction de la distance de mise au point et est choisi pour qu'à la distance de mise au point, le rapport d'anamorphose soit égal à n.

En particulier, l'ensemble optique cylindrique peut présenter une focale variable. Il peut à cet effet comporter deux lentilles cylindriques (en général une convergente, une divergente) formant un doublet convergent ou divergent selon que l'ensemble optique cylindrique est convergent ou divergent, ainsi qu'un moyen pour faire varier l'écart entre les deux lentilles cylindriques du doublet pour modifier la distance focale de l'ensemble optique cylindrique et donc la valeur du coefficient de correction k, en faisant varier la focale du doublet, tout en maintenant confondus les plans de mise au point de l'ensemble optique cylindrique et du réseau lenticulaire.

Il est avantageux que le dispositif comporte une lentille de champ convergente ayant un foyer disposé par exemple dans ledit plan de mise au point commun au réseau lenticulaire et à l'ensemble optique cylindrique. D'une manière préférée, cette lentille de champ permet de faire converger les rayons lumineux parallèles audit axe optique et passant par les centres C des lenticules du réseau lenticulaire en un même point 0 avantageusement situé dans la pupille d'entrée de l'optique de reprise et autrement dit, de faire converger les rayons passant par le centre optique C des lenticules du réseau lenticulaire dans la pupille d'entrée de l'optique de reprise.

Cette lentille de champ permet en particulier d'éviter le phénomène de vignettage, notamment lors des prises de vue de près.

Selon un mode de réalisation préféré, le dispositif selon l'invention comporte, en aval de chaque lenticule dudit réseau lenticulaire, au moins une surface plane inclinée par rapport à un plan normal à l'axe optique avec des angles tels que les rayons lumineux parallèles à l'axe optique et passant par les centres optiques des lenticules convergent en un même point de convergence donné O. Ceci permet d'assurer la fonction de la lentille de champ, sans influer sur les paramètres optiques du dispositif.

Le dispositif selon l'invention peut constituer un élément d'un dispositif de prise de vue, que ce soit un dispositif vidéo ou bien un dispositif destiné au cinéma, présentant une optique de reprise assurant le cadrage de ladite image et la mise au point sur ladite image.

Le dispositif selon l'invention est avantageusement couplé à un dispositif de reprise aérienne de l'image autostéréoscopique, comportant un moyen de focalisation sur un capteur vidéo tel qu'un capteur à couplage de charges CCD, notamment un capteur tri-CCD couleur, ou bien sur la surface d'un film.

Le dispositif selon l'invention peut constituer un dispositif de prise de vue d'un endoscope vidéo ou bien encore d'un visiophone. Dans le cas d'un endoscope, le dispositif de formation d'image et le dispositif vidéo de reprise d'image sont incorporés à la tête de l'endoscope. La base stéréoscopique est en générale inférieure à l'écart interpupillaire d'un observateur. Les signaux vidéo en mode "n images" sont retransmis par câble notamment par fibre optique, avec les avantages mentionnés dans les Brevets français précités, en vue de leur visualisation et/ou de leur enregistrement.

Dans le cas d'un visiophone, le dispositif de formation d'image et le dispositif vidéo de reprise constituent une caméra unique de prise de vue qui retransmet par câble ou par voie hertzienne les signaux vidéo en mode "n images" en vue de leur visualisation par exemple sur un moniteur équipé d'un réseau de visualisation et/ou de leur enregistrement.

Il est particulièrement avantageux que le dispositif vidéo de reprise d'image soit une caméra vidéo tel qu'un camescope mis au point sur ladite image. Le dispositif de formation d'image selon l'invention constitue dans ce cas un complément optique de la caméra vidéo sur laquelle il peut s'adapter à l'aide d'une bague d'adaptation.

Dans le cas d'une application au cinéma, le dispositif selon l'invention est avantageusement couplé à un dispositif de reprise aérienne de ladite image autostéréoscopique comprenant un moyen de localisation sur un film. Ce dispositif de reprise est avantageusement une caméra de prise de vue de cinéma mise au point sur ladite image.

Le dispositif peut être caractérisé en ce qu' il comporte une lentille de champ, ou bien une surface plan formant dioptre, qui est affectée à chaque lenticule du réseau lenticulaire, et en ce que ledit point de convergence donné est situé dans la pupille d'entrée de l'optique de reprise.

Par application du principe du retour inverse de la lumière, le dispositif selon l'invention peut être également mis en oeuvre en tant qu'élément de recombinaison d'images d'un dispositif de projection ou de rétro-projection que se soit selon la technique vidéo ou selon celle du cinéma.

L'invention concerne donc également un dispositif de projection d'images, soit par projection, directe, soit par rétro-projection, tel que défini à la revendication 18 et comportant un dispositif de formation d'images tel que défini à la revendication 1, ledit plan de mise au point commun constituant un plan de mise au point objet, un projecteur projetant une image comportant n images élémentaires plates de format anamorphosé cadrée dans le plan de mise au point objet et un écran équipé d'au moins un réseau de projection tel qu'un réseau lenticulaire ou un réseau de parallaxe, ledit réseau de projection étant situé à une distance D du réseau lenticulaire du dispositif, de formation d'image, qui est égale à la distance nominale de visualisation. La lentille cylindrique et le réseau lenticulaire du dispositif de formation d'image sont positionnés de sorte que l'image située au plan de mise au point objet soit projetée à la distance D par le dispositif de formation d'image. L'angle de champ des éléments du réseau de projection est tel que chaque dit élément cadre horizontalement le réseau lenticulaire du dispositif de formation d'image, et ledit réseau lenticulaire présente deux lenticules non contigus dont les axes sont espacés de l'écart inter-pupillaire d'un observateur.

Ledit écran peut être un écran de projection directe comportant un élément diffusant et réfléchissant devant lequel est disposé le réseau de projection, lequel constitue également un réseau de visualisation.

Ledit écran peut être un écran de rétro-projection comportant un réseau de projection et un réseau de visualisation, et un élément diffusant disposé entre eux.

L'invention concerne enfin un système vidéo autostéréoscopique tel que défini à la revendication 22.

D'autres caractéristiques et avantages de l'invention apparaîtront mieux à la lecture de la description qui va suivre, donnée à titre d'exemple non limitatif, en liaison avec les dessins ci-annexés, dans lesquels :

- les figures 1 à 4 illustrent respectivement les premier, deuxième, troisième et quatrième modes de réalisation de l'invention ;
- les figures 5, 6, 7 et 8 représentent à la fois dans un plan horizontal et dans un plan vertical contenant l'axe optique les paramètres optiques correspondant respectivement aux figures 1, 2, 3 et 4.
- les figures 9 à 12 représentent des dispositifs correspondant respectivement aux figures 1 à 4 et présentant une optique de reprise ;
- les figures 13 à 16 illustrent un mode de réalisation préféré de l'invention mettant en oeuvre des régions planes de compensation prismatique ;
- la figure 17 illustre une application de l'invention à l'endoscopie ;
- la figure 18 illustre une application de l'invention à la vidéo-surveillance ;
- les figures 19 et 20 représentent respectivement un dispositif de projection et de rétro-projection selon l'invention ;
- la figure 21 est un schéma illustrant la détermination de l'angle de champ d'une lentille cylindrique d'un réseau de projection ou de rétro-projection ;

- et la figure 22 illustre la condition de la "teinte plate" pour une visualisation sur écran cathodique.

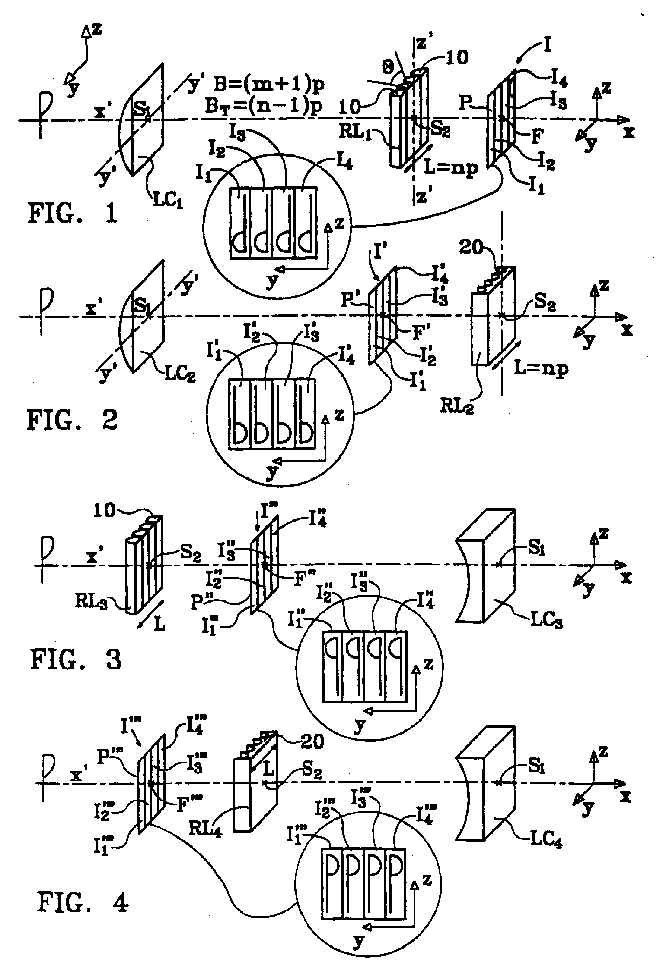

Selon la figure 1, un dispositif selon l'invention, qui peut aussi bien convenir comme dispositif de prise de vue que, par retour inverse de la lumière, comme dispositif de projection, comporte successivement une lentille cylindrique convergente $LC_1$ ayant un centre optique $S_1$ situé sur l'axe optique horizontal x'x et dont l'axe longitudinal y'y est horizontal et perpendiculaire à x'x, et un réseau lenticulaire convergent $RL_1$ présentant n lenticules cylindriques convexes 10 jointifs de pas p (avec n =4), chacun de ces lenticules ayant un axe longitudinal parallèle à l'axe vertical z'z qui passe par le centre optique $S_2$ situé sur l'axe optique x'x.

Pour une mise au point à l'infini, la lentille cylindrique convergente $LC_1$ et le réseau lenticulaire convergent $RL_1$ ont le même plan focal P qui intersecte l'axe x'x au point focal F.

En outre, le rapport entre les distances focales $S_1F$ et $S_2F$ de la lentille cylindrique $LC_1$ et du réseau lenticulaire $RL_1$ est sensiblement égal à n, c'est-à-dire que dans l'exemple ci-dessus, $S_1F$ est égal à 4 fois $S_2F$.

Dans ces conditions, et comme il sera montré par la suite de la description, l'image obtenue dans le plan focal P présente un rapport d'anamorphose sensiblement égal à n entre la composante verticale et la composante horizontale de chacune des images élémentaires $I_1$, $I_2$, $I_3$ et $I_4$. L'image I ainsi obtenue comporte donc quatre images planes juxtaposées et jointives de format anamorphosé $I_1....I_4$ qui correspondent au "mode n images" des Brevets français précités. La base stéréoscopique totale $B_T$ est égale à (n-1) p.

L'image I peut être reprise en image aérienne par un dispositif de reprise d'image associé à un objectif d'entrée placé en amont du dispositif de formation d'image.

Cependant, il est nettement préférable de se dispenser d'objectif d'entrée et d'associer le dispositif de formation d'image à une optique de reprise qui sera décrite plus loin.

Sur le capteur à couplage de charges CCD, ou sur un film, l'image est directement obtenue dans le mode dit "n images". Cette image peut également faire l'objet, conformément à l'enseignement de ces Brevets, d'une imbrication des colonnes de points image ou "pixels" de manière à obtenir une image autostéréoscopique comportant n points de vue (ou images élémentaires) imbriqués que l'on peut ensuite afficher sur un écran, par exemple un écran de télévision, devant lequel est placé un réseau cylindrique tel qu'un réseau lenticulaire.

De même, une rétro-projection peut être obtenue directement à partir des images plates de format anamorphosé $I_1$, $I_2$, $I_3$, $I_4$, conformément à l'enseignement des Brevets français précités.

Les considérations des deux paragraphes précédents sont bien entendu applicables aux cas des deuxième, troisième et quatrième modes de réalisation décrits ci-après.

Le deuxième mode de réalisation de l'invention illustré à la figure 2, met en oeuvre une lentille cylindrique convergente $LC_2$ d'axe horizontal perpendiculaire à l'axe x'x et un réseau lenticulaire divergent $RL_2$ ayant n lenticules cylindriques concaves 20 jointifs d'axe vertical. La lentille $LC_2$ et le réseau $RL_2$ ont un plan focal commun P' qui est situé entre la lentille cylindrique $LC_2$ et le réseau lenticulaire $RL_2$. Le plan P' intersecte l'axe optique x'x au point focal F' et les images plates élémentaires de format anamorphosé $I'_1$, $I'_2$, $I'_3$ et $I'_4$ sont des images dont la composante horizontale est virtuelle et dont la composante verticale est réelle.

Pour obtenir un rapport d'anamorphose sensiblement égal à n entre les composantes horizontales et verticales des images élémentaires, on choisit, comme dans le cas précédent, un rapport entre les distances focales de la lentille cylindrique $LC_2$ et des lenticules élémentaires du réseau lenticulaire $RL_2$ qui est sensiblement égal à -n, soit $S_1F'$ = $-nS_2F'$ = $-4S_2F'$ (dans l'exemple représenté).

Le troisième mode de réalisation met en oeuvre successivement un réseau lenticulaire convergent $R_{L3}$ présentant n lenticules élémentaires convergents 20 d'axe vertical et une lentille cylindrique divergente $LC_3$ croisée avec le réseau $RL_3$, c'est-à-dire que l'axe de la lentille $LC_3$ est horizontal et est perpendiculaire à l'axe x'x. L'image I" au plan P" qui est le plan focal commun au réseau lenticulaire $RL_3$ et à la lentille cylindrique $RC_3$ comporte quatre images plates anamorphosées $I''_1$, $I''_2$, $I''_3$ et $I''_4$ qui sont des images dont la composante verticale est virtuelle et dont la composante horizontale est réelle et qui présentent un rapport d'anamorphose sensiblement égal à - n lorsqu'ils sont vus en aval de la lentille cylindrique $LC_3$. La condition est, comme précédemment, un rapport des distances focales entre la lentille cylindrique $LC_3$ et le réseau lenticulaire $RL_3$ égal à -n soit $S_2F''$ = $-nS_1F''$ = $- 4S_1F''$ (dans l'exemple représenté).

Enfin, le quatrième mode de réalisation met en oeuvre successivement un réseau lenticulaire divergent $RL_4$ comprenant n lenticules divergents 20 d'axe vertical et une lentille cylindrique divergente $LC_4$ croisée avec le réseau lenticulaire $RL_4$. L'image I''' est une image virtuelle située au plan focal P''' commun aux lenticules du réseau lenticulaire $RL_4$ et à la lentille divergente $LC_4$ et comportant quatre images plates anamorphosées $I'''_1$, $I'''_2$, $I'''_3$ et $I'''_4$. Ce plan P''' est situé en amont du réseau lenticulaire $RL_4$ et intersecte l'axe optique x'x au point F'''. La condition de compensation du rapport d'anamorphose est comme précédemment que le rapport des distances focales soit sensiblement égal à n, soit $S_2F'''$ = $nS_1F'''$ = $4S_1F'''$ (dans l'exemple représenté). Ce quatrième mode de réalisation est le mode préféré, car c'est celui qui permet la réalisation la plus compacte en raison de l'empilement favorable des côtes, et aussi parce qu'il n'introduit pas d'inversion d'image.

Pour les quatre modes de réalisation précités, $S_1$ désigne le centre géométrique de la lentille cylindrique convergente $LC_1$ situé sur l'axe optique x'x, et $S_2$ désigne le centre optique du réseau lenticulaire convergent $RL_1$, situé sur l'axe optique x'x.

Dans chacun de ces modes, on peut soit mettre en oeuvre une lentille cylindrique ($LC_1...LC_4$) soit un doublet convergent ($LC_1$, $LC'_1$), un doublet convergent ($LC_2$, $LC'_2$), un doublet divergent ($LC_3$, $LC'_3$) ou un doublet divergent ($LC_4$, $LC'_4$).

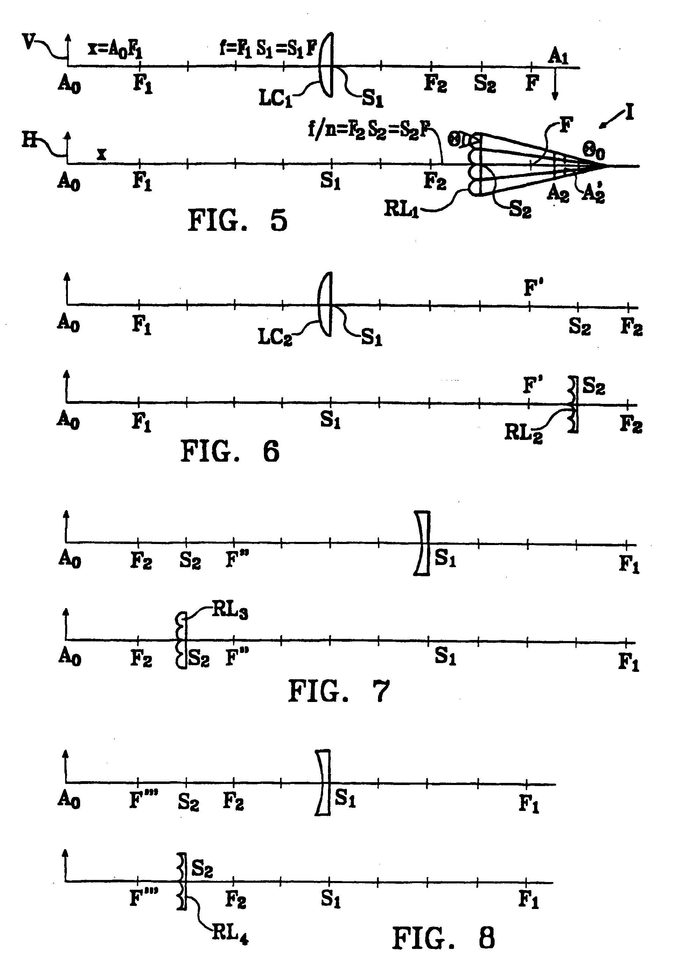

La figure 5 correspond au premier mode de réalisation (Fig. 1) de manière à en illustrer les paramètres optiques, d'une part dans le plan vertical (schéma du haut de la figure 5) dans lequel le doublet $LC_1$-$LC'_1$ agit comme une lentille cylindrique convergente et dans lequel le réseau lenticulaire **RL$_1$** peut être considéré comme une lame à faces parallèles, et d'autre part dans le plan horizontal (schéma du bas de la figure 5) dans lequel la lentille $LC_1$ peut être considérée comme une lame à faces parallèles et dans lequel le réseau lenticulaire $RL_1$ est optiquement actif en tant que réseau convergent à n lenticules 10.

Pour le mode de fonctionnement en tant que dispositif de prise de vue, la lentille cylindrique convergente $LC_1$ (ou le doublet) a un foyer objet $F_1$ et un foyer image F, et le réseau lenticulaire convergent $RL_1$ présente un foyer objet $F_1$ (défini comme l'intersection de son plan focal objet avec l'axe optique x'x) et un foyer image F confondu avec celui de la lentille cylindrique $LC_1$.

Soit un objet placé au point $A_o$ et présentant une composante verticale V et une composante horizontale H. Le dispositif ($LC_1$, $RL_1$) forme de la composante verticale V une image située au point $A_1$ et de la composante horizontale H une image située au point $A_2$.

Soit :

$$\overline{A_oA_1} = L \qquad \overline{S_1F} = -f_1 \qquad \overline{S2F} = -f_2$$

$$\overline{S_1A_1} = p'_1 \qquad \overline{S_1A_o} = p_1 \qquad \overline{S_2A_1} = p'_2 \qquad \overline{S_2A_o} = p_2$$

Le grandissement $\gamma_1$ dans le plan vertical a pour valeur :

$$\gamma_1 = \frac{\overline{S_1A_1}}{\overline{S_1A_o}} = \frac{p'_1}{p_1}$$

On a en outre :

$$\frac{1}{\overline{S_1A_1}} = \frac{1}{\overline{S_1A_o}} + \frac{1}{\overline{SF}} \qquad \text{soit} \quad \frac{1}{p'_1} = \frac{1}{p_1} + \frac{1}{f_1}$$

$$\overline{A_oA_1} = -p_1 + p'_1 = L$$

$$-p_1 p'_1 = Lf_1$$

Il s'en suit que :

$$\gamma_1 = \frac{p'_1}{p_1} = \frac{L - \sqrt{L^2 - 4Lf_1}}{-L - \sqrt{L^2 - 4Lf_1}} = -\frac{1 - \sqrt{1 - 4f_1/L}}{1 + \sqrt{1 - 4f_1/L}} \qquad (1)$$

Un calcul similaire montre que le grandissement $\gamma_2$ dans le plan horizontal a pour valeur :

$$\gamma_2 = - \frac{1 - \sqrt{1-4f_2/L}}{1 + \sqrt{1-4f2/L}} \qquad (2)$$

en considérant que $A_oA_2 = L$

Le coefficient d'anamorphose C a pour valeur :

$$C = \gamma_1 / \gamma_2 \qquad (3)$$

Pour un objet à l'infini, on a :

$$C = \frac{f_1}{f_2} \qquad (4)$$

En effet, $C \to f_1/f_2$ lorsque $L \to \infty$.

Si on choisit un rapport $f_1/f_2$ égal à n, le coefficient d'anamorphose C est effectivement égal à n (par exemple, n = 4 dans l'exemple représenté) pour un objet placé à l'infini.

Au fur et à mesure que l'objet se rapproche, toutes choses égales par ailleurs, le coefficient d'anamorphose C tend à augmenter, mais cette variation est lente.

Selon un mode de réalisation préféré, on réalise une compensation d'anamorphose pour la distance d'observation de l'objet à visualiser. De ce fait, le coefficient d'anamorphose C reste très proche de la valeur souhaitée, c'est-à-dire $C \simeq n$, dans la plage de mise au point.

Cette compensation s'effectue en calculant la valeur du rapport n* - $f_1/f_2$ qui permet d'obtenir un rapport d'anamorphose C = n à la distance d'observation $A_oS_1$ de l'objet $A_o$ de la figure 5.

EXEMPLE 1 :

On choisit:

$\gamma_1$ = - 0,1, avec
$p_1$ = -3m $p'_1$ = 0,3m d'où $f_1$ = 0,272m

$$\gamma_2 = -0,1/n = -0,1/4 = -0,025 = \frac{p'_2}{p_2}$$

$-p_2 + p'_2$ = 3,3m
$-p_2 + \gamma_2 p_2$ = 3.3m

d'où $\quad p_2 = \dfrac{-3,3}{1+0,025} = -3,22m$

$p_2$ = - 3,22m $p'_2$ = 0,08m

$$\frac{1}{0,08} = -\frac{1}{3,22} + \frac{1}{f'_2} \qquad f'_2 = 0,0785m$$

d'où $\dfrac{f'_1}{f'_2} = \dfrac{0,272}{0,0785} = 3,465 = n^* = 4k$

Quand le rapport d'anamorphose C est exactement compensé pour un objet situé à 3m de la lentille cylindrique $LC_1$, le rapport C est égal à 3,465 pour un objet situé à l'infini, conformément à la formule (4) ci-dessus, soit $\Delta C/C = 13,3\%$ et k = 0,866.

Pour un objet situé à 2m, on a C = 4,55, soit $\Delta C/C = 13,8\%$.

Pour un coefficient d'anamorphose exactement compensé à 3 m (C = 4), le coefficient $\Delta C/C$ est compris entre environ $\pm$ 13% de 2m à l'infini, ce qui est tout à fait compatible avec une prise de vue de qualité. Une telle déformation, qui est de nature progressive, est, en effet, peu décelable par un observateur. Elle peut être compensée en fonction de la distance de mise au point, comme indiqué dans la suite de la description.

Il faut noter que, dans le cas d'une projection ou d'une rétro-projection, le coefficient k de projection peut intervenir et c'est donc le produit des coefficients k utilisés à la prise de vue et/ou à la projection (ou rétro-projection) qui est à prendre en compte.

La formule donnant les valeurs de $\gamma_1$ et $\gamma_2$ et du rapport d'anamorphose C sont les mêmes pour les deuxième, troisième et quatrième modes de réalisation (voir les figures 6, 7 et 8). Pour une lentille cylindrique convergente, la valeur de la distance focale est positive, et elle est négative pour une lentille divergente.

A la figure 6, $F_1$ désigne le foyer objet de la lentille convergente $LC_2$, F' le foyer image de la lentille convergente $LC_2$ et le foyer image du réseau lenticulaire divergent $RL_2$, et $F_2$ désigne le foyer objet du réseau lenticulaire $RL_2$. La valeur du rapport d'anamorphose C est négative.

A la figure 7, $F_2$ désigne le foyer objet du réseau lenticulaire convergent $RL_3$, F' désigne le foyer image du réseau lenticulaire convergent $RL_3$ et le foyer image de la lentille cylindrique divergente $LC_3$, et $F_1$ le foyer objet de la lentille cylindrique $LC_3$. La valeur du rapport d'anamorphose C est négative.

Enfin, à la figure 8, F' désigne le foyer image du réseau lenticulaire divergent $RL_4$ et le foyer image de la lentille cylindrique divergente $LC_4$, $F_2$ désigne le foyer objet du réseau lenticulaire divergent $RL_4$, et $F_1$ désigne le foyer objet de la lentille cylindrique divergente $LC_4$. La valeur du rapport d'anamorphose est positive.

Le cas d'une mise au point à 4 mètres (L = 4) sera illustré dans les exemples numériques suivants pour lesquels on a utilisé les formules (1) à (3) ci-dessus pour calculer la valeur de $f_2$.

EXEMPLE II : lentille cylindrique convergente - réseau lenticulaire convergent (fig. 1 et 5), avec $f_1 = 0,1$ m.

Pour obtenir un coefficient d'anamorphose C = 4 avec une mise au point à 4 m, le calcul montre que les lenticules du réseau lenticulaire convergent doivent avoir une distance focale $f_2 = 0,02598m$, soit $n^* = |f_1/f_2| = 3,85$, soit k = n*/n = 0,96.

EXEMPLE III : lentille cylindrique convergente-réseau lenticulaire divergent (fig. 2 et 6), avec $f_1 = 0,1$ m. Pour obtenir un coefficient d'anamorphose C = - 4 avec une mise au point à 4m, le calcul montre que les lenticules du réseau lenticulaire divergent doivent avoir une distance focale $f_2 = - 0,0267$ m, d'où $n^* = |f_1/f_2| = 3,75$ soit k = 0,94.

EXEMPTE IV : lentille cylindrique divergente-réseau lenticulaire divergent (fig. 3 et 7) avec $f_1 = - 1$ m. Pour obtenir un coefficient d'anamorphose C = 4 avec une mise au point à 4 m, le calcul montre que les lenticules du réseau lenticulaire divergent doivent avoir une distance focale $f_2 = - 0,024$ m, d'où $n^* = |f_1/f_2| = 4,15$ soit k = 1,04.

EXEMPLE V : lentille cylindrique divergente-réseau lenticulaire convergent (fig. 4 et 8), avec $f_1 = - 0,1$ m. Pour obtenir un coefficient d'anamorphose C = - 4 avec une mise au point à 4m, le calcul montre que les lenticules du réseau lenticulaire convergent doivent avoir une distance focale $f_2 = 0,0235$ m, soit $n^* - |f_1/f_2| = 4,25$ d'où k = 1,06

Ces exemples II à V peuvent être récapitulés dans le tableau suivant.

| C $\diagdown$ $f_1$ | 100 mm | -100 mm |
|---|---|---|
| 4 | 26 mm | - 24 mm |
| - 4 | -26,7 mm | 23,5 mm |

**Visée à 4 m**

En pratique, dans le cas des modes de réalisation des figures 1, 2, 5 et 6, k pourra être choisi entre 0,8 et 1 ou bien entre 0,85 et 1, et de préférence entre 0,9 et 1. Dans le cas des modes de réalisation selon les figures 3, 4, 7 et 8, k pourra être choisi entre 1 et 1,2 ou bien entre 1 et 1,15 et de préférence entre 1 et 1,1.

Le dispositif 31 de formation d'image peut également comporter une lentille de champ destinée à diminuer ou éviter le phénomène de vignettage, et faciliter la mise au point.

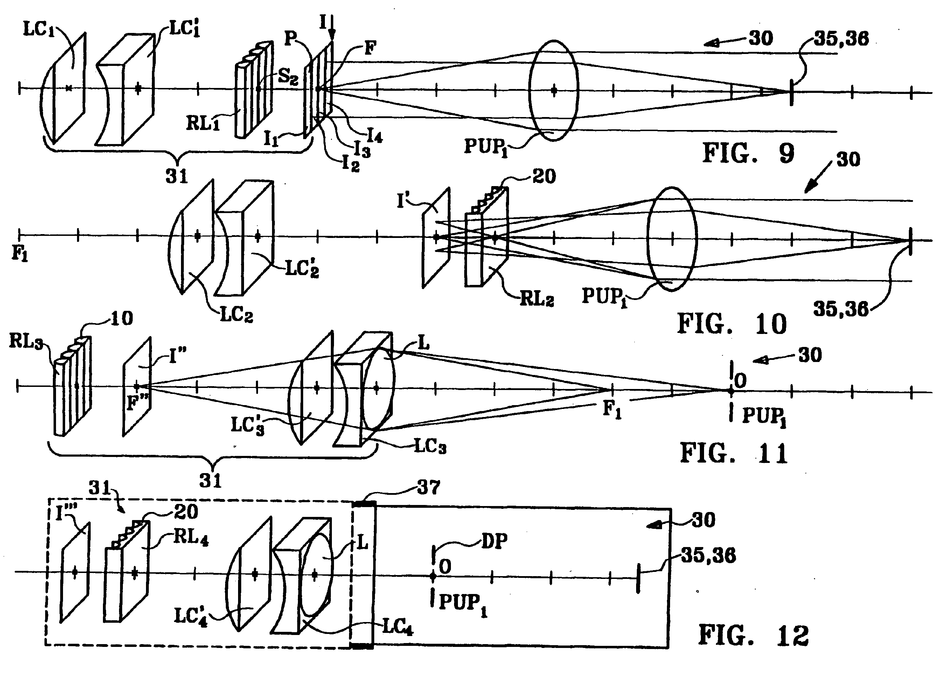

De tels dispositifs correspondant respectivement aux quatre modes de réalisations des figures 1 à 4 sont représentés aux figures 9 à 12.

La mise en oeuvre d'une lentille de champ a pour but de permettre que les rayons reçus parallèlement à l'axe optique et passant par le centre C des lenticules 10 ou 20 du réseau lenticulaire ($RL_1$..$RL_4$) convergent vers l'optique de reprise en un point O situé dans la pupille d'entrée PUP de l'optique de reprise.

Dans le cadre de la présente invention, la mise en oeuvre d'une lentille de champ sphérique modifie les paramètres optiques du système, sans modifier le rapport d'anamorphose.

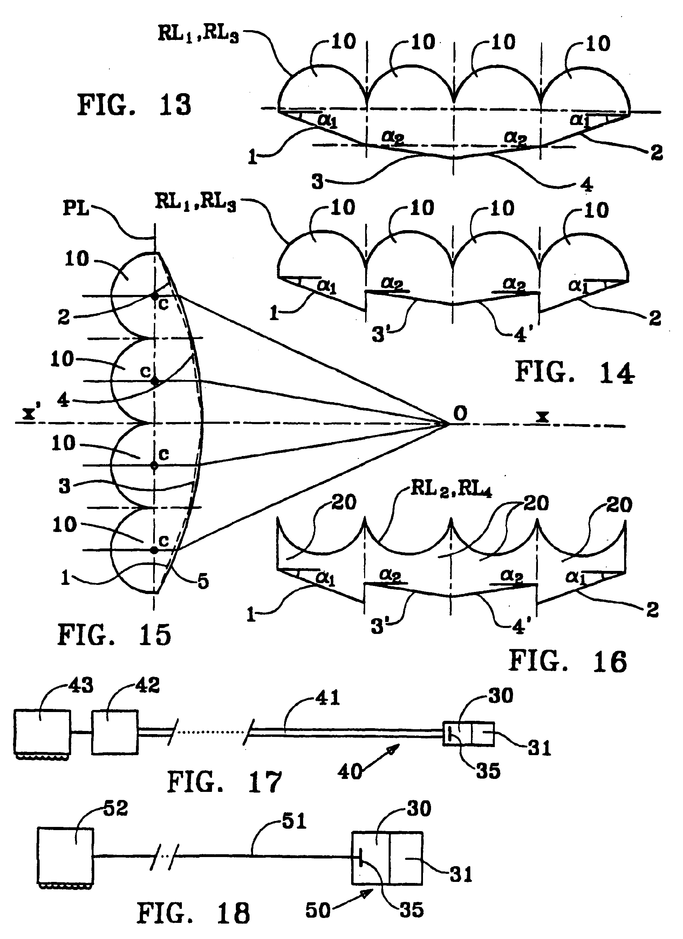

Il est possible de mettre en oeuvre une lentille de champ cylindrique d'axe parallèle à l'axe des lenticules du réseau lenticulaire (voir figure 15). Ceci a cependant une influence sur le rapport d'anamorphose. Une solution avantageuse est d'approximer la courbure de la lentille de champ cylindrique par autant de surfaces planes formant dioptre 1, 2, 3, 4 (ou de prismes) qu'il y a de lenticules dans le réseau cylindrique, comme représenté aux figures 13 (surfaces 1, 2, 3, 4) et 14 (surfaces 1, 2, 3', 4') pour un réseau lenticulaire convergent et à la figure 16 (surfaces 1, 2, 3', 4', par exemple) pour un réseau lenticulaire divergent.

L'inclinaison $\alpha_1$, et $\alpha_2$ (avec $\alpha_2 < \alpha_1$) des surfaces planes par rapport au plan PL reliant les centres C des lenticules 10 ou 20, plan qui est perpendiculaire à l'axe optique x'x, est choisi de manière à approximer le contour du dioptre convergent 5 dont la courbure est choisie pour faire converger au point 0 situé dans la pupille d'entrée P de l'optique de reprise, les rayons passant par les centres C des lenticules 10 et 20 et qui passent par un point situé sur l'axe x'x et à une distance donnée.

Dans chacun des cas, et en se plaçant dans un fonctionnement en tant que dispositif de prise de vue, le foyer image de la lentille de champ LCH est situé à la pupille d'une optique de reprise 30, dans le cas où une telle optique est mise en oeuvre.

On notera que chacun des n lenticules qui composent le réseau lenticulaire a un angle de champ θ qui est égal à l'angle de champ que l'on a choisi pour l'image. Les conditions optiques à remplir sont beaucoup plus simples que dans l'Art Antérieur selon les Brevets français précités. En effet, le dispositif selon l'invention permet de s'affranchir d'un objectif d'entrée et des problèmes de parallaxe qui en résultent.

La mise au point sur un objet s'effectue en jouant sur l'ensemble optique cylindrique. Dans le cas où celui-ci présente une focale réglable et comporte par exemple un doublet, on règle la focale du doublet tout en maintenant la concordance entre lesdits plans focaux image du doublet et du réseau lenticulaire.

Dans le cas d'un doublet, le réglage de la focale s'effectue en écartant ou en rapprochant les deux lentilles cylindriques (une convergente, une divergente) constituant le doublet. Ce déplacement peut être piloté par un moteur pas à pas. La concordance entre les plans focaux du doublet et du réseau lenticulaire peut être obtenue en tant que de besoin en écartant ou en rapprochant le doublet du réseau lenticulaire, ce déplacement pouvant également être piloté par un moteur pas à pas.

Dans chacun des modes de réalisation, la profondeur de champ obtenue est très élevée.

En outre, avec un réseau lenticulaire dont les lenticules sont jointifs, on obtient directement dans le plan focal du réseau, des images $I_1...L_4$ qui sont jointives entre elles pour un objectif de reprise assurant une reprise aérienne. Ceci est également la conséquence du fait qu'il est possible de se dispenser d'optique d'entrée à lentilles sphériques qui, dans l'Art Antérieur, implique une condition de mise en correspondance entre la pupille d'entrée de l'objectif et le champ des lenticules et des conditions particulières que doit remplir l'optique de reprise (voir les Brevets précités du Demandeur).

Le dispositif 31 peut être associé à une optique de reprise dont l'axe optique est l'axe x'x (voir les figures 9 à 12). La fonction de cette optique de reprise est, de permettre en particulier de former une image réelle sur le capteur CCD 35 d'une caméra vidéo ou sur un film 36, notamment dans le cas de la vidéo, pouvant avoir un grossissement inférieur à 1, de manière à superposer l'image I, I', I" ou II'" au capteur CCD 35, comme dans le cas des Brevets français précités du Demandeur.

L'optique de reprise 30 est de préférence orthoscopique et forme une image réelle reprenant l'image I, I', II" ou I'" composée de n images élémentaires de format anamorphosé au niveau du capteur CCD 35 par exemple un capteur tri-CCD de la caméra vidéo pour obtenir une image nette sur le capteur CCD 35 de la caméra vidéo (ou dans le plan d'un film 36).

L'optique de reprise 30 comporte en général un diaphragme DP qui permet de diaphragmer l'image de grande ouverture fournie par l'ensemble optique cylindrique et le réseau lenticulaire. Le dispositif 31 comportant l'ensemble optique cylindrique et le réseau lenticulaire peut constituer un boîtier qui est monté sur l'optique de reprise 30 à l'aide d'une bague d'adaptation 37, cette optique de reprise pouvant être intégrée à une caméra vidéo tel qu'un camescope ou à une caméra de prise de vue sur film.

En vidéo, le grossissement de l'optique de reprise est choisi de manière telle que chaque image projetée sur les capteurs CCD par l'optique de reprise présente une largeur égale à celle de N/n pixels du capteur CCD. La précision de cette concordance est de l'ordre de la largeur d'un pixel en ce qui concerne le grandissement de l'image, alors que dans le cas des Brevets français précités, la précision à obtenir peut être, en raison de l'imbrication des images, par exemple de l'ordre de 1/100ème de pixel, ce qui impose une procédure de réglage spécifique du dispositif de prise de vue. En outre, avec le dispositif de prise de vue selon l'invention, un décalage latéral de l'image égal à la largeur d'un pixel, qui serait dû à une translation ou à des vibrations n'entraîne pour seul inconvénient pratique qu'une perte d'information uniquement en ce qui concerne la colonne de pixels commune à deux images élémentaires adjacentes, ce qui à la visualisation ne se traduit que par une perte d'information négligeable en bord d'image.

Dans le cas d'une prise de vue sur film, la seule contrainte sur le grandissement de l'optique de reprise est que l'image réelle reprenant l'image I (ou I' ou I" ou I'") ait un format correspondant à celui du film. Comme précédemment, la cohérence spatiale due au réseau lenticulaire fait qu'un décalage dû à une translation ou à des vibrations n'entraîne de conséquence qu'en bord de champ. Ceci est particulièrement intéressant étant donné qu'il n'existe jusqu'à présent aucun dispositif de prise de vue stéréoscopique sur film mettant en oeuvre une seule optique de prise de vue.

Comme la base stéréoscopique est déterminée par le pas des n lenticules cylindriques du réseau lenticulaire RL, la présence d'une optique de reprise ayant un grandissement inférieur à l'unité est nécessaire dans la plupart des applications vidéo, sauf à disposer d'un capteur CCD de grandes dimensions ou à filmer une petite scène.

Dans le cas d'une caméra macroscopique, ou d'un endoscope, ou bien encore dans le cas d'une prise de vue sur film, il est possible dans tous les cas de mettre en oeuvre une optique de reprise formant dans son plan focal image une image réelle dudit plan de mise au point commun, le capteur CCD ou le film étant disposé dans le plan image de l'optique de reprise, laquelle peut présenter un grossissement quelconque adapté à la taille du capteur, ce grossissement pouvant aussi bien être inférieur ou supérieur à 1 et par exemple voisin de 1, ou bien encore égal à 1.

L'optique de reprise présente une distance focale telle que le champ perçu corresponde le plus précisément possible au cadrage du réseau lenticulaire par l'optique de reprise.

Dans ces conditions, et étant donné que la reprise d'image est aérienne, l'optique de reprise reçoit de chaque lenticule 10 ou 20 uniquement les rayons lumineux correspondant à chaque image élémentaire.

La figure 17 illustre le cas d'un endoscope. La tête 40 d'un endoscope comporte le dispositif de formation d'image 31 et une optique de reprise 30 comportant un capteur CCD 35. L'image est transmise en mode "n images" par le câble 41 (ou par un émetteur vidéo) et est reçue par un dispositif 42 assurant le traitement éventuel de l'image pour son affichage par exemple sur un récepteur de télévision 43 équipé d'un réseau lenticulaire, et/ou son enregistrement.

La figure 18 illustre le cas d'un visiophone dont la caméra 50 comporte un dispositif 31 et une optique de reprise 30 pourvu d'un capteur 35. L'image est transmise en mode "n images" par un câble 51 (ou par ondes hertziennes) vers un moniteur TV 52 équipé d'un réseau, et intégrant éventuellement un dispositif de traitement d'images en vue de sa visualisation et/ou un magnétoscope.

On décrit ci-après deux méthodes permettant d'assurer la mise au point du dispositif de reprise d'image :

1) selon la première méthode, l'objectif de reprise est un zoom de faible amplitude ;

a) on positionne en premier lieu la lentille cylindrique (ou le doublet cylindrique) pour que son plan de mise au point image coïncide avec le plan de mise au point de l'optique de reprise pour l'objet $A_o$ sur lequel on effectue la mise au point (mise au point horizontale) ;
b) on déplace le réseau lenticulaire pour que son plan image (réel ou virtuel) coïncide pour le même objet $A_o$ avec le plan de mise au point précité de la lentille cylindrique, qui est vu par l'optique de reprise (mise au point verticale) ;

c) on zoome le cas échéant l'optique de reprise pour que l'image du réseau lenticulaire corresponde à la largeur du capteur ;

d) dans le cas où l'ensemble optique cylindrique comporte un doublet, on ajuste le doublet en faisant varier la distance entre les deux lentilles cylindriques qui le compose (en général une lentille cylindrique convergente et une lentille cylindrique divergente) de manière à corriger le rapport d'anamorphose conformément aux formules données plus haut.

On répète les étapes 1a) à 1d) en cas de changement de mise au point.

2) Selon la deuxième méthode qui est la méthode préférée, l'objectif de reprise ne comporte pas de fonction "zoom". On règle au départ le dispositif de prise de vue en mettant en oeuvre les étapes 1 a) et 1 b), pour une distance de mise au point donnée par exemple à l'infini, ou à une distance de mise au point moyenne (par exemple 3m). On cale l'optique de reprise pour que l'image du réseau lenticulaire corresponde à la largeur du capteur.

Les changements de mise au point s'effectuent en mettant à profit le fait que pour un objectif et donc pour l'objectif de reprise, une faible variation de mise au point (donnant une image $A'_2$ au lieu de $A_2$) conserve en première approximation l'angle de champ $\theta_o$ de l'objectif (voir fig.5).

Lors des changements de mise au point, le réseau lenticulaire reste fixe.

Un changement de misé au point consiste alors à déplacer l'ensemble optique cylindrique pour faire coïncider les deux composantes, verticale et horizontale, de l'image de l'objet $A_o$ situé à la distance de mise au point souhaitée $\Delta$, image qui est formée à travers l'ensemble optique cylindrique et le réseau lenticulaire.

L'ensemble optique cylindrique et le réseau lenticulaire ont alors un plan de mise au point commun, qui est légèrement espacé du plan focal du réseau lenticulaire.

On effectue ensuite la mise au point de l'optique de reprise dans le plan de mise au point commun de sorte que l'image de l'objet $A_o$ soit nette.

Cette procédure peut être déterminée par le calcul et automatisée.

Une procédure manuelle consiste à régler la mise au point de l'objectif de reprise sur la composante verticale de l'image vue à travers le réseau lenticulaire, cette image correspondant à un objet situé à la distance de mise au point souhaitée $\Delta$. La mise au point de la composante horizontale est ensuite réglée par déplacement de l'ensemble optique cylindrique.

Au cas où l'ensemble optique cylindrique comporte un doublet, on fait préalablement varier l'écart entre les deux lentilles cylindriques constituant ce doublet pour obtenir la distance focale souhaitée $f_1$ qui correspond à la correction du rapport d'anamorphose pour la distance de mise au point souhaitée, on met ensuite en oeuvre l'une ou l'autre des deux procédures précitées, au cours desquelles on déplace l'ensemble optique cylindrique comme indiqué ci-dessus.

Ces deux procédures (automatisée et manuelle) sont utilisables, par application du principe du retour inverse des rayons lumineux, au cas d'un dispositif de projection ou de rétro-projection équipé d'un réseau et situé à une distance D. Dans ce cas, un projecteur, par exemple un projecteur vidéo CCD ou un projecteur de cinéma envoie une image en mode "n images" de manière que celle-ci soit nette dans le plan de mise au point commun, lequel est choisi pour que la distance de mise au point $\Delta$ corresponde à la distance D.

On obtient ainsi sur l'écran ED n images de format normal (désanamorphosé). Le rapport entre les distances focales du réseau lenticulaire et de la lentille cylindrique du dispositif de formation d'images est avantageusement corrigé du facteur k correspondant à la distance de projection D.

Le dispositif selon l'invention se prête donc, par retour inverse de la lumière, à la mise en oeuvre de dispositifs de projection ou de rétro-projection, en raison du fait qu'il permet de projeter n images élémentaires qui sont transformées en images de format normal (non anamorphosé) par les n lenticules cylindriques du dispositif. Pour ce type de fonctionnement, les foyers mentionnés précédemment comme foyers objet et foyers image deviennent respectivement des foyers image et des foyers objet.

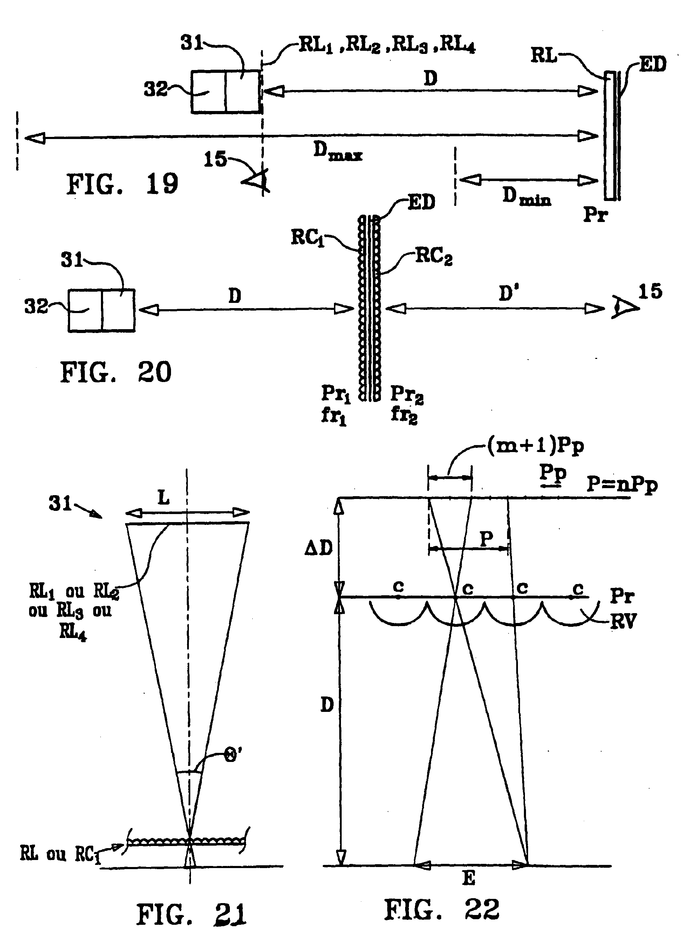

Le dispositif de projection (fig. 19) est avantageusement disposé à une distance D de l'écran ED sensiblement égale à la distance d'observation nominale (distance théorique de la teinte plate), et est situé de préférence au dessus des spectateurs.

Il peut projeter à une distance D une image vidéo ou un film à partir d'une image I, I', ou I" ou I' " formée au voisinage de son plan focal objet F, F', F" ou F'". Dans le cas du premier mode de réalisation (Fig. 1 et 5), l'image I peut être générée directement au voisinage du plan F, soit en vidéo, soit en plaçant le film au voisinage du plan F, F', F" ou F'".

Un projecteur 32, par exemple un projecteur à cristaux liquides projette par son optique sur un dispositif 31 des images obtenues par le dispositif de prise de vue selon l'invention, ou bien des images en mode "n images" qui sont obtenues autrement, notamment selon les Brevets précités du Demandeur, ou bien encore des images de synthèse en mode "n images".

Le dispositif 31 qui est selon l'un des quatre modes de réalisation de l'invention (figures 5 à 12) projette à une distance D ces images sous forme de n images élémentaires de format non anamorphosé, sur l'écran ED qui est en général un dépoli, à travers le réseau lenticulaire RL ayant des lenticules d'axe vertical, par exemple N/n lenticules, qui sert à la visualisation des images, D désignant la distance entre le réseau lenticulaire RL$_1$ (ou RL$_2$ ou RL$_3$ ou RL$_4$) et le réseau lenticulaire de projection RL de l'écran.

Les dimensions de l'écran diffusant ED et la distance D sont choisies pour que les n points de vue de format normal (non anamorphose) projetés s'inscrivent dans le cadre de l'écran ED.

Chacun des lenticules du réseau lenticulaire RL disposé à la distance D du dispositif de projection a un angle de champ θ' (voir figure 21) qui lui permet de cadrer le réseau lenticulaire RL$_1$ (ou RL$_2$, ou RL$_3$, ou RL$_4$) de largeur L, d'où tg θ'/2 = L/2D.

La base stéréoscopique totale du réseau lenticulaire RL1 (ou RL2 ou RL3 ou RL4) de projection est égale à 1,5 fois l'écart interpupillaire E d'un observateur (E = 65 mm), dans le cas de 4 points de vue.

Un observateur, dont les yeux 10 sont placés à la distance D de l'écran ED qui est donc réglé pour que la distance théorique de la teinte plate (ou distance nominale de vision), soit égale à D, voit alors les couples d'images stéréoscopiques 1 et 3 et 2 et 4 avec une base stéréoscopique qui est égale à la base stéréoscopique B de la prise de vue. Il existe alors, en raison des propriétés de l'autostéréoscopie homogène telles qu'elles ont été indiquées ci-dessus et pour peu que la base stéréoscopique entre deux images adjacentes soit égale à la moitié de l'écart interpupillaire E ou plus généralement de la base stéréoscopique désirée B, un volume d'observation stéréoscopique situé entre une distance D$_{min}$ et D$_{max}$ avec D$_{min}$ < D < D$_{max}$, et selon un angle d'observation assez large qui est en pratique de l'ordre de 60° ou plus.

Il est bien entendu possible de choisir n > 4, soit en conservant à la projection entre les points de vue adjacents une base stéréoscopique égale à 0,5 E, soit en intercalant entre les points de vue un ou plusieurs points de vue supplémentaires, les points de vue adjacents présentant entre eux une base stéréoscopique élémentaire inférieure à 0,5 E et qui est un sous-multiple de E, soit E/(m + 1), avec m entier. Dans ce cas, la distance de la teinte plate est déterminée pour que l'observateur voie soit les points de vue 1 et 2 + m, soit les points de vue 2 et 3 + m...., etc...

Un rétro-projecteur selon un mode de réalisation préféré est représenté à la figure 20. Comme indiqué ci-dessus, il est possible de mettre en oeuvre le rétro-projecteur selon le Brevet français précité pour projeter séparément les n images élémentaires des images I ,I', I" ou I'".

Cependant, le dispositif selon l'invention permet de substituer aux n projecteurs élémentaires mis en oeuvre dans le Brevet français 2 705 007 précité, un dispositif selon l'invention qui présente un axe optique unique, et en particulier un objectif unique. Les pas des réseaux respectivement de projection RC$_1$ et de visualisation RC$_2$, RC$_1$ pouvant être un réseau lenticulaire ou un réseau de parallaxe, de même que RC$_2$, conservent avantageusement les valeurs indiquées dans le Brevet FR-2 705 007. En particulier, le pas des réseaux lenticulaires RC$_1$ et RC$_2$ peut être en vidéo inférieur à la moitié de la dimension d'un pixel projeté sur l'écran ED, en général un dépoli. La condition optique à remplir est que chaque élément du réseau de projection RC$_1$, c'est-à-dire chaque lenticule dans le cas d'un réseau lenticulaire, cadre exactement le réseau lenticulaire RL$_1$ ou RL$_2$, ou RL$_3$ ou RL$_4$). La condition d'angle de champ θ' s'exprime donc de la même façon que dans le cas du dispositif de projection.

Soit donc D la distance entre le dispositif de rétroprojection et l'écran ED et D' la distance nominale de positionnement du spectateur, dite distance nominale de la teinte plate.

Le réseau RC$_1$ ayant un pas Pr$_1$, et le réseau RC$_2$ ayant un pas Pr$_2$, les conditions sont les suivantes :

- tout d'abord, le réseau de projection RC$_1$ doit être déterminé pour que chacune de ses lentilles ait un angle de champ θ' répondant aux mêmes conditions que le réseau RL de la figure 19, c'est-à-dire que chaque lentille du réseau RL voie à la distance D le réseau lenticulaire du dispositif de projection.

En outre, pour une distance D' de la teinte plate souhaitée, on doit avoir :

$$\frac{Pr1}{Pr2} = \cdot \frac{D}{D'} \frac{(f_{r2} + D')}{(f_{r1} + D)}$$

fr$_1$ et fr$_2$ désignant la distance focale des lentilles cylindriques du réseau de projection RC$_1$ et du réseau de visualisation RC$_2$.

On notera que tant dans le cas de la figure 19 que de la figure 20, un réseau ou les deux réseaux peuvent être un réseau de type barrière de parallaxe.

Dans le cas d'une image vidéo, le pas des réseaux RL, RC$_1$ et RC$_2$ est avantageusement inférieur ou égal à la moitié de la taille d'un point image ou pixel sur l'écran E. Le pas des réseaux RL, RC$_1$ et RC$_2$ peut être choisi aussi petit que le permet le grain du dépoli constituant l'écran E. En effet, si le pas des réseaux est trop petit, le grain du dépoli introduit une perte de définition. Par exemple, ledit pas peut être compris entre 0,1 et 0,5 fois la taille d'un pixel sur l'écran E.

Un problème à prendre en compte lors de la projection ou de la rétro-projection, ou bien encore lors de la visualisation sur un écran est celui de l'orthostéréoscopie.

Si lors de la prise de vue, le point de vue $I_1$ du couple stéréoscopique $(I_1, I_3)$ correspond à l'oeil gauche, et le point de vue $I_3$ à l'oeil droit, et si le point de vue $I_2$ du couple stéréoscopique $(I_2, I_4)$ correspond à l'oeil gauche et le point de vue $I_4$ à l'oeil droit, il faut qu'il en soit de même pour le spectateur : la vision est alors orthostéréoscopique.

Si par exemple l'oeil gauche du spectateur voit le point de vue $I_3$ et son oeil droit voit le point de vue $I_1$, la perception du relief est inversée, et ce qui est en relief est perçu en creux et vise-versa : la vision est alors pseudostéréoscopique.

Dans le cas des premier et troisième modes de réalisation, le réseau lenticulaire, respectivement $RL_1$ et $RL_3$ est convergent.

Les points de vue obtenus, respectivement $I_1$ à $I_4$ et $I''_1$ à $I''_4$ tels qu'ils sont vus à travers le dispositif, sont respectivement retournés et soumis à une inversion droite-gauche, et non-retournés et soumis à une inversion droite-gauche. Ceci a été représenté en encadré aux figures 1 et 3 en prenant pour objet la lettre P à gauche sur le dessin.

Dans le cas des deuxième et quatrième modes de réalisation, le réseau lenticulaire, respectivement $RL_2$ et $RL_4$ est divergent.

Les points de vue obtenus $I'_1$ à $I'_4$, et. $I'''_1$ et $I'''_4$, tels qu'ils sont vus à travers le dispositif, sont respectivement retournés et non soumis à une inversion droite-gauche, et non retournés et non soumis à une inversion droite-gauche. Ceci a été représenté aux figures 2 et 4 en prenant pour objet la lettre P à gauche sur le dessin.

Il faut qu'entre la prise de vue et la projection, il y ait compensation des permutations de sorte que les images soient vues à l'endroit et dans le bon ordre. Il suffit de respecter cette condition pour réaliser un système associant un dispositif de prise de vue selon l'invention et un dispositif de projection selon l'invention, que ce soit en vidéo ou avec un film. Ceci est toujours possible puisque les quatre modes de réalisation décrits correspondent aux quatre cas possibles.

On notera que, dans le cas d'un film, un léger déplacement latéral du film par rapport au dispositif de projection se traduit à la visualisation par un déplacement d'ensemble de l'image sans perturber la vision du relief.

La figure 22 illustre la condition "de la teinte plate" pour une visualisation sur un écran de télévision. L'image comporte des colonnes de pixels imbriquées. A chaque lenticule du réseau RV de pas $P_r$ correspond n colonnes de pixel de l'écran. Les centres C des lenticules sont distants de $\Delta D$ du plan des pixels sur l'écran tel que 43 ou 53. Le pas des pixels est $p_p$. On a $P = np_p$. A la distance D, dite de "teinte plate", on a classiquement :

$$P/P_r = \frac{D + \Delta D}{D}$$

La condition d'autostéréoscopie homogène (observation de deux points de vue séparés par m points de vue intermédiaires) est : $\Delta D = (m + 1) p_p D/E$.

## Revendications

1. Dispositif de formation d'une image autostéréoscopique comprenant n points de vue ou images élémentaires, ledit dispositif comportant un réseau lenticulaire comprenant des lenticules cylindriques disposés côte à côte et ayant des axes longitudinaux parallèles à une première direction perpendiculaire à un axe optique du dispositif et un ensemble optique cylindrique comprenant au moins une lentille cylindrique ($LC_1 ... LC_4$) dont l'axe longitudinal est perpendiculaire à la première direction et audit axe optique, le réseau lenticulaire ($RL_1... RL_4$) comportant n lenticules cylindrique et le réseau lenticulaire et l'ensemble optique cylindrique ayant un plan de mise au point commun situé à une distance de mise au point ($\Delta$), **caractérisé en ce que** la valeur absolue du rapport entre la distance focale de l'ensemble optique cylindrique et la distance focale du réseau lenticulaire est sensiblement égale à n.

2. Dispositif selon la revendication 1, **caractérisé en ce que** l'ensemble optique cylindrique ($LC_1$) est convergent et **en ce que** le réseau lenticulaire ($RL_1$) est également convergent.

3. Dispositif selon la revendication 1, **caractérisé en ce que** l'ensemble optique cylindrique ($LC_2$) est convergent et **en ce que** le réseau lenticulaire ($RL_2$) est divergent.

4. Dispositif selon la revendication 1, **caractérisé en ce que** l'ensemble optique cylindrique est divergent ($LC_3$) et **en ce que** le réseau cylindrique ($RL_3$) est convergent.

5. Dispositif selon la revendication 1, **caractérisé en ce que** la l'ensemble optique cylindrique est divergent ($LC_4$) et **en ce que** le réseau cylindrique ($RL_4$) est également divergent.

6. Dispositif selon une des revendications précédentes, **caractérisé en ce que** la valeur absolue dudit rapport entre la distance focale de l'ensemble optique cylindrique et la distance focale des lenticules du réseau lenticulaire est égal à n*, n* étant égal à nk, k étant un coefficient de correction de rapport de grandissement tel que, pour un objet $A_O$ situé dans ledit plan de mise au point à ladite distance donnée ($\Delta$), chacun des points de vue dé l'image ait un rapport d'anamorphose dont la valeur absolue est égale à n.

7. Dispositif selon la revendication 6, **caractérisé en ce que** l'ensemble optique cylindrique présente une focale variable et **en ce qu'**il comporte un moyen pour modifier sa distance focale et donc la valeur du coefficient de correction k.

8. Dispositif selon une des revendications précédentes, **caractérisé en ce que** ledit ensemble optique comporte deux lentilles cylindriques formant un doublet.

9. Dispositif selon une des revendications précédentes, **caractérisé en ce qu'**il comporte une lentille de champ convergente (L) faisant converger les rayons lumineux parallèles audit axe optique (x'x) et passant par les centres (C) des lenticules du réseau lenticulaire ($RL_1...RL_4$) en un même point de convergence donné (0), qui est situé dans la pupille d'entrée (P) d'une optique de reprise assurant le cadrage de ladite image et la mise au point sur ladite image.

10. Dispositif selon une des revendications précédentes **caractérisé en ce qu'**en aval de chaque lenticule (10, 20), dudit réseau lenticulaire ($RL_1...RL_4$), est disposée au moins une surface plane (1, 2, 3, 4, 3', 4') inclinée par rapport à un plan PL normal à l'axe optique (x'x) avec des angles ($\alpha_1$, $\alpha_2$) tel que les rayons lumineux parallèles à l'axe optique (x'x) et passant par les centres optiques (C) des lenticules (10, 20) convergent en un même point de convergence donné (0) qui est situé dans la pupille d'entrée (P) d'une optique de reprise assurant le cadrage de ladite image et la mise au point sur ladite image.

11. Dispositif de prise de vue, **caractérisé en ce qu'**il comporte un dispositif (31) de formation d'image selon une des revendications 9 ou 10 et un dispositif d'acquisition d'image (30) présentant ladite optique de reprise.

12. Dispositif selon la revendication 11, **caractérisé en ce que** le dispositif d'acquisition d'image est un dispositif vidéo (30) de reprise aérienne de ladite image autostéréoscopique I, I', I'', I''', comprenant un moyen de focalisation sur un capteur vidéo (35) tel qu'un capteur à couplage de charges CCD de manière à constituer un dispositif de prise de vue vidéo.

13. Dispositif selon la revendication 12, **caractérisé en ce que** le dispositif de formation d'image et le dispositif vidéo de reprise sont incorporés à un endoscope et **en ce que** la base stéréoscopique B est inférieure à l'écart inter-pupillaire E d'un observateur.

14. Dispositif selon la revendication 12, **caractérisé en ce que** le dispositif de formation d'image (31) et le dispositif vidéo de reprise (30) sont incorporés à un visiophone (50, 51, 52).

15. Dispositif selon la revendication 12, **caractérisé en ce que** le dispositif vidéo de reprise d'image est une caméra vidéo, telle qu'un camescope, mise au point sur ladite image, ledit dispositif de formation d'image (31) étant monté sur la caméra vidéo comme un complément optique.

16. Dispositif selon la revendication 11, **caractérisé en ce que** le dispositif d'acquisition d'image (30) comporte un dispositif de focalisation sur un film (36).

17. Dispositif selon la revendication 16, **caractérisé en ce que** le dispositif de focalisation est une caméra de prise de vue de cinéma.

18. Dispositif de projection d'images, **caractérisé en ce qu'**il comporte un dispositif de formation d'image selon une des revendications 1 à 10, ledit plan de mise au point commun constituant un plan de mise au point objet, un projecteur projetant une image comportant n images élémentaires plates de format anamorphosé cadrée dans le plan de mise au point objet et un écran équipé d'un écran diffusant et d'au moins un réseau de projection, à savoir un réseau lenticulaire ou un réseau de parallaxe, ledit réseau de projection étant situé à une distance D du réseau lenticulaire ($RL_1...RL_4$) du dispositif de formation d'images (31) , qui constitue la distance nominale de visualisation, **en ce que** la lentille cylindrique ($LC_1...LC_4$) et le réseau lenticulaire ($RL_1....RL_4$) du dispositif de formation d'image (31) sont positionnés de sorte que l'image située au plan de mise au point objet soit projetée à la distance D par le dispositif de formation d'image, **en ce que** l'angle de champ θ' des éléments du réseau de projection (RL, RC$_1$) est tel que chaque dit élément cadre perpendiculairement à la première direction et audit axe optique le réseau lenticulaire (RL$_1$....RL$_4$) du dispositif de formation d'image et **en ce que** ledit réseau lenticulaire (RL$_1$....RL$_4$) du dispositif de formation d'image présente deux lenticules non contigus dont les axes sont espacés de l'écart inter-pupillaire E d'un observateur.

19. Dispositif selon la revendication 18, **caractérisé en ce que** ledit écran est un écran de projection directe comportant un élément diffusant et réfléchissant (ED) devant lequel est placé le réseau de projection (RL), lequel constitue également un réseau de visualisation.

20. Dispositif selon la revendication 18, **caractérisé en ce que** ledit écran est un écran de rétro-projection comportant un élément diffusant (ED) disposé entre ledit réseau de projection (RC$_1$) et un réseau de visualisation (RC$_2$).

21. Dispositif de projection d'images selon une des revendications 18 à 20, **caractérisé en ce que** le projecteur est un projecteur vidéo et **en ce que** le réseau de projection et/ou le réseau de visualisation ont un pas inférieur ou égal à la moitié de la taille d'un point image ou pixel sur l'écran.

22. Système vidéo autostéréoscopique, **caractérisé en ce qu'**il comporte un dispositif de prise de vue selon une des revendications 11 à 17 et un dispositif de projection d'images selon une des revendications 18 à 21.

**Claims**

1. A device for forming an autostereoscopic image having <u>n</u> viewpoints, said device including a lens array comprising cylindrical lenticles disposed side by side and having longitudinal axes parallel to a first direction perpendicular to an optical axis of the device and a cylindrical optical assembly comprising at least one cylindrical lens (LC$_1$ ... LC$_4$) whose longitudinal axis is perpendicular to the first direction and to said optical axis, wherein the lens array (RL$_1$ ... RL$_4$) includes <u>n</u> cylindrical lenticles, the lens array and the cylindrical optical assembly sharing a common focusing plane corresponding to a focusing distance (Δ), **characterized in that** the absolute value of the ratio between the focal length of the cylindrical optical assembly and the focal length of the lens array is substantially equal to <u>n.</u>

2. A device according to claim 1, **characterized in that** the cylindrical optical assembly (LC$_1$) is converging and **in that** the lens array (RL$_1$) is also converging.

3. A device according to claim 1, **characterized in that** the cylindrical optical assembly (LC$_2$) is converging and **in that** the lens array (RL$_2$) is diverging.

4. A device according to claim 1, **characterized in that** the cylindrical optical assembly (LC$_3$) is diverging and **in that** the lens array (RL$_3$) is converging.

5. A device according to claim 1, **characterized in that** the cylindrical optical assembly (LC$_4$) is diverging and **in that** the lens array (RL$_4$) is also diverging.

6. A device according to any preceding claim, **characterized in that** the absolute value of said ratio between the focal length of the cylindrical optical assembly and the focal length of the lenticles of the lens array is equal to n*, where n* is equal to nk, and <u>k</u> being a magnification ratio correction coefficient such that for an object (A$_0$) situated in said focusing plane at said given distance(Δ), each of the viewpoints of the image has an anamorphosis ratio whose absolute value is equal to <u>n.</u>

7. A device according to claim 6, **characterized in that** the cylindrical optical assembly has a variable focal length, and **in that** it includes means for modifying its focal length and thus for modifying the value of the correction coefficient <u>k.</u>

8. A device according to any preceding claim, **characterized in that** the optical system includes two cylindrical lenses forming a doublet.

9. A device according to any preceding claim, **characterized in that** it includes a converging field lens (L) causing light rays parallel to said optical axis (x'x) and passing through the centers (C) of the lenticles of the lens array

($RL_1$ ... $RL_4$) to converge on a given common convergence point (O), that is situated in the entrance pupil (P) of a transfer optical system ensuring framing of said image and focusing on said image.

10. A device according to any preceding claim, **characterized in that** downstream from each lenticle (10, 20) of said lens array ($RL_1$ ... $RL_4$) there is disposed at least one plane surface (1, 2, 3, 4, 3', 4') that is inclined relative to a plane PL normal to the optical axis (x'x) by angles ($\alpha_1$, $\alpha_2$) such that light rays parallel to the optical axis (x'x) and passing through the optical centers (C) of the lenticles (10, 20) converge on a given common convergence point (O), which is situated in the entrance pupil (P) of a transfer optical system ensuring the framing of said image and the focusing on said image.

11. A picture-taking device, **characterized in that** it includes an image-forming device (31) according to claims 9 and 10, and an image acquisition device (30) having a transfer optical system for centering said image and focusing on said image.

12. A device according to claim 11, **characterized in that** the image acquisition device is a video device (30) for transferring said autostereoscopic image I, I', I", I"" in air, comprising means for focusing on a video sensor (35) such as a charge coupled device (CCD) sensor, so as to constitute a video picture-taking device.

13. A device according to claim 12, **characterized in that** the image-forming device and the video transfer device are incorporated in an endoscope, and **in that** the stereoscopic baseline B is smaller than the distance E between the pupils of an observer.

14. A device according to claim 12, **characterized in that** the image-forming device (31) and the video transfer device (30) are incorporated in a videophone (50, 51, 52).

15. A device according to claim 12, **characterized in that** the video image transfer device is a video camera, such as a camcorder, focused on said image, said image-forming device (31) being mounted on the video camera as an optical accessory.

16. A device according to claim 11, **characterized in that** the image acquisition device (30) includes a device for focusing on a film (36).

17. A device according to claim 16, **characterized in that** the focusing device is a camera for taking cinema pictures.

18. An image projection device **characterized in that** it includes an image-forming device according to any one of claims 1 to 10, said common focusing plane constituting an object focusing plane, a projector projecting an image including n flat elementary images of anamorphic format framed in the object focusing plane, and a screen fitted with an emitting screen and least one projection array, specifically, a lens array or a parallax array, said projection array being situated at a distance D from the lens array ($RL_1$ ... $RL_4$) of the image-forming device (31) which constitutes the nominal viewing distance, **in that** the cylindrical lens ($LC_1$ ... $LC_4$) and the lens array ($RL_1$ ... $RL_4$) of the image-forming device (31) are positioned in such a manner that the image situated in the object focusing plane is projected to the distance D by the image-forming device, **in that** the field angle ($\theta'$) of the elements of the projection array (RL, $RC_1$) is such that each said element frames the lens array ($RL_1$ ... $RL_4$) of the image-forming device perpendicularly to the first direction and to said optical axis, and **in that** said lens array ($RL_1$ ... $RL_4$) of the image-forming device has two non-contiguous lenticles whose axes are spaced apart by the distance (E) between the pupils of an observer.

19. A device according to claim 18, **characterized in that** said screen is a direct projection screen having a diffusing and reflecting element (ED) with the projection array (RL) placed in front thereof, which array also constitutes a viewing array.

20. A device according to claim 18, **characterized in that** said screen is a back-projection screen having a diffusing element (ED) disposed between said projection array ($RC_1$) and a viewing array ($RC_2$).

21. A device for projecting images according to any one of claims 18 to 20, **characterized in that** the projector is a video projector, and **in that** the projection array and. or the display array have a pitch that is less than or equal to half the size of an image point or pixel on the screen.

**22.** An autostereoscopic video system, **characterized in that** it includes a picture-taking device according to any one of claims 11 to 17, and an image projection device according to any one of claims 18 to 21.

**Patentansprüche**

**1.** Vorrichtung zum Erzeugen eines autostereoskopen Bilds, das n Blickpunkte oder Elementarbilder enthält, wobei die Vorrichtung ein linsenförmiges Netz aufweist, das zylindrische linsenförmige Körper nebeneinander aufweist und Längsachsen parallel zu einer ersten Richtung senkrecht zu einer optischen Achse der Vorrichtung hat, und eine zylindrische optische Einheit, die mindestens eine zylindrische Linse ($LC_1,... LC_4$) aufweist, deren Längsachse zu der ersten Richtung und zur optischen Achse senkrecht ist, und die n zylindrische linsenförmige Körper aufweist, und wobei das linsenförmige Netz und die zylindrische optische Einheit einen gemeinsamen Fokussierungspunkt in einer Fokussierungsentfernung ($\Delta$) haben, **dadurch gekennzeichnet, dass** der Absolutwert des Verhältnisses zwischen der Brennweite der zylindrischen optischen Einheit und der Brennweite des linsenförmigen Netzes im Wesentlichen gleich n ist.

**2.** Vorrichtung nach Anspruch 1, **dadurch gekennzeichnet, dass** die zylindrische optische Einheit ($LC_1$) konvergent ist und dass das linsenförmige Netz ($RL_1$) ebenfalls konvergent ist.

**3.** Vorrichtung nach Anspruch 1, **dadurch gekennzeichnet, dass** die zylindrische optische Einheit ($LC_2$) konvergent ist und dass das linsenförmige Netz ($RL_2$) divergent ist.

**4.** Vorrichtung nach Anspruch 1, **dadurch gekennzeichnet, dass** die zylindrische optische Einheit ($LC_3$) divergent ist, und dass das zylindrische Netz ($RL_3$) konvergent ist.

**5.** Vorrichtung nach Anspruch 1, **dadurch gekennzeichnet, dass** die zylindrische optische Einheit ($LC_4$) divergent ist, und dass das zylindrische Netz ($RL_4$) ebenfalls divergent ist.

**6.** Vorrichtung nach einem der vorhergehenden Ansprüche, **dadurch gekennzeichnet, dass** der Absolutwert des Verhältnisses zwischen der Brennweite der zylindrischen optischen Einheit und der Brennweite der linsenförmigen Körper des linsenförmigen Netzes gleich n* ist, wobei n* gleich nk ist, wobei k ein Korrekturkoeffizient des Vergrößerungsverhältnisses derart ist, dass jeder der Blickpunkte des Bilds für ein Objekt $A_o$, das sich in der Fokussierungsebene in der gegebenen Entfernung ($\Delta$) befindet, ein Anamorphoseverhältnis hat, dessen Absolutwert gleich n ist.

**7.** Vorrichtung nach Anspruch 6, **dadurch gekennzeichnet, dass** die zylindrische optische Einheit eine variable Brennweite aufweist, und dass sie ein Mittel aufweist, um ihre Brennweite und daher den Wert des Korrektorkoeffizienten k zu ändern.

**8.** Vorrichtung nach einem der vorhergehenden Ansprüche, **dadurch gekennzeichnet, dass** die optische Einheit zwei zylindrische Linsen, die ein Doppelobjektiv bilden, aufweist.

**9.** Vorrichtung nach einem der vorhergehenden Ansprüche, **dadurch gekennzeichnet, dass** sie eine konvergente Feldlinse (L) aufweist, die die zwei Lichtstrahlen, die zu der optischen Achse (x'x) parallel sind, unter Durchgehen durch die Mitten (C) der linsenförmigen Körper des linsenförmigen Netzes ($RL_1,... RL_4$) in einem gleichen gegebenen Konvergenzpunkt (0), der sich in der Eingangspupille (P) einer Übernahmeoptik, die das Abgleichen des Bilds und die Fokussierung auf dem Bild sicherstellt, liegt, konvergieren lässt.

**10.** Vorrichtung nach einem der vorhergehenden Ansprüche, **dadurch gekennzeichnet, dass** stromabwärts jedes linsenförmigen Körpers (10, 20) des linsenförmigen Netzes ($RL_1,.... RL_4$) mindestens eine ebene Fläche (1, 2, 3, 4, 3', 4'), die zu einer Ebene PL, senkrecht zu der optischen Achse (x'x) mit Winkeln ($\alpha_1, \alpha_2$) geneigt ist, angeordnet ist, so dass die Lichtstrahlen, die zu der optischen Achse (x'x) parallel sind und durch die optischen Mitten (C) der linsenförmigen Körper (10, 20) gehen, in einem gleichen gegebenen Konvergenzpunkt (0), der sich in der Eingangspupille (P) einer Übernahmeoptik befindet, die das Abgleichen des Bilds und das Fokussieren auf das Bild sicherstellt, konvergieren.

**11.** Bildaufnahmevorrichtung, **dadurch gekennzeichnet, dass** sie eine Vorrichtung (31) zum Erzeugen eines Bilds nach einem der Ansprüche 9 oder 10 und eine Bilderfassungsvorrichtung (30) aufweist, die die Übernahmeoptik aufweist.

**12.** Vorrichtung nach Anspruch 11, **dadurch gekennzeichnet, dass** die Bilderfassungsvorrichtung eine Videovorrichtung (30) zur oberirdischen Übernahme des autostereoskopen Bilds I, I', I'', I''' ist, die ein Mittel zum Fokussieren auf einen Videosensor (35), wie zum Beispiel ein ladungsgekoppelter Sensor CCD, derart aufweist, dass eine Videobildaufnahmevorrichtung gebildet wird.

**13.** Vorrichtung nach Anspruch 12, **dadurch gekennzeichnet, dass** die Vorrichtung zur Bilderzeugung und die Übernahmevideovorrichtung in ein Endoskop eingebaut sind, und dass der Stereoskopabstand B kleiner ist als der Zwischenpupillenabstand E eines Beobachters.

**14.** Vorrichtung nach Anspruch 12, **dadurch gekennzeichnet, dass** die Bilderzeugungsvorrichtung (31) und die Videoübernahmevorrichtung (30) in ein Videotelefon (50, 51, 52) eingebaut sind.

**15.** Vorrichtung nach Anspruch 12, **dadurch gekennzeichnet, dass** die Bildübernahmevideovorrichtung eine Videokamera ist, wie zum Beispiel ein Camcorder, die auf das Bild fokussiert ist, wobei die Bilderzeugungsvorrichtung (31) als eine optische Ergänzung auf die Videokamera montiert ist.

**16.** Vorrichtung nach Anspruch 11, **dadurch gekennzeichnet, dass** die Bilderfassungsvorrichtung (30) eine Vorrichtung zum Fokussieren auf einen Film (36) aufweist.

**17.** Vorrichtung nach Anspruch 16, **dadurch gekennzeichnet, dass** die Fokussierungsvorrichtung eine Kino-Bildaufnahmekamera ist.

**18.** Vorrichtung zum Projizieren von Bildern, **dadurch gekennzeichnet, dass** sie eine Bilderzeugungsvorrichtung nach einem der Ansprüche 1 bis 10 aufweist, wobei die gemeinsame Fokussierungsebene, die eine Objekt-Fokussierungsebene bildet, einen Projektor aufweist, der ein Bild projiziert, das n flache elementare Bilder mit anamorphotischem Format, die in der Objekt-Fokussierungsebene abgeglichen sind, und einen Bildschirm, der mit einem diffudierenden Schirm ausgestattet ist, und mindestens ein Projektionsnetz, nämlich ein linsenförmiges Netz oder einem Parallaxennetz, wobei das Projektionsnetz in einer Entfernung D von dem linsenförmige Netz ($RL_1,... RL_4$) der Bilderzeugungsvorrichtung (31) liegt, die die Anzeige-Nennentfernung bildet, dass die zylindrische Linse ($LC_1,... LC_4$) und das linsenförmige Netz ($RL_1,.... RL_4$) der Bilderzeugungsvorrichtung (31) derart positioniert sind, dass das Bild, das sich in der Objekt-Fokussierungsebene befindet, über die Entfernung D von der Bilderzeugungsvorrichtung projiziert wird, dass der Feldwinkel θ' der Elemente des Projektionsnetzes ($RL, RC_1$) derart ist, dass jedes Element senkrecht zu der ersten Richtung und zu der optischen Achse des linsenförmigen Netzes ($RL_1,... RL_4$) der Bilderzeugungsvorrichtung abgleicht, und dass das linsenförmige Netz ($RL_1,... RL_4$) der Bilderzeugungsvorrichtung zwei nicht aneinander grenzende linsenförmige Körper aufweist, deren Achsen um den Zwischenpupillenabstand E eines Beobachters beabstandet sind.

**19.** Vorrichtung nach Anspruch 18, **dadurch gekennzeichnet, dass** der Bildschirm ein Direkt-Projektionsbildschirm ist, der ein diffundierendes und reflektierendes Element (ED) aufweist, vor dem das Projektionsnetz (RL), das auch ein Anzeigenetz bildet, platziert ist.

**20.** Vorrichtung nach Anspruch 18, **dadurch gekennzeichnet, dass** der Bildschirm ein Overhead-Projektionsbildschirm ist, der ein diffundierendes Element (ED) aufweist, das zwischen dem Projektionsnetz ($RC_1$) und einem Anzeigenetz ($RC_2$) angeordnet ist.

**21.** Projektionsvorrichtung für Bilder nach einem der Ansprüche 18 bis 20, **dadurch gekennzeichnet, dass** der Projektor ein Videoprojektor ist, und dass das Projektionsnetz und/oder das Anzeigenetz einen Rasterschritt haben, der gleich der Hälfte der Größe eines Bildpunkts oder Pixels auf dem Bildschirm ist.

**22.** Autostereoskopes Videosystem, **dadurch gekennzeichnet, dass** es eine Bildaufnahmevorrichtung nach einem der Ansprüche 11 bis 17 und eine Bildprojektionsvorrichtung nach einem der Ansprüche 18 bis 21 aufweist.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

**EP 0 897 549 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3688045 A
- US 5099320 A
- FR 2705007
- FR 2704951